# EUROPÄISCHE PATENTSCHRIFT

(11) **EP 2 356 505 B1**
(45) Veröffentlichungstag und Bekanntmachung des Hinweises auf die Patenterteilung: **17.09.2014**
(21) Anmeldenummer: 09756260.7
(22) Anmeldetag: 14.11.2009
(51) Int. Cl.: G02B 21/36, G02B 27/58, G02B 21/16, G01N 21/64

(54) **AUFLÖSUNGSGESTEIGERTE MIKROSKOPIE**
INCREASED RESOLUTION MICROSCOPY
MICROSCOPIE À RÉSOLUTION ACCRUE

(30) Priorität: 27.11.2008 DE 102008059328
(43) Veröffentlichungstag der Anmeldung: 17.08.2011
(73) Patentinhaber: Carl Zeiss Microscopy GmbH, 07745 Jena (DE)
(72) Erfinder: WOLLESCHENSKY, Ralf, 07743 Jena (DE); KLEPPE, Ingo, 07743 Jena (DE); KRAMPERT, Gerhard, 07743 Jena (DE); KEMPE, Michael, 07751 Jena (DE)
(74) Vertreter: Geyer, Fehners & Partner
(86) Internationale Anmeldenummer: PCT/EP2009/008117
(87) Internationale Veröffentlichungsnummer: WO 2010/060545

(56) Entgegenhaltungen:
- WO-A2-2006/127692
- WO-A2-2008/091296
- DE-B3-102006 021 317
- HESS S T ET AL: "Ultra-high resolution imaging by fluorescence photoactivation localization microscopy" BIOPHYSICAL JOURNAL, NEW YORK, US, US, Bd. 91, Nr. 11, 1. Dezember 2006 (2006-12-01), Seiten 4258-4272, XP008082813 ISSN: 0006-3495
- HELL S W ET AL: "Concepts for nanoscale resolution in fluorescence microscopy" CURRENT OPINION IN NEUROBIOLOGY, LONDON, GB, Bd. 14, Nr. 5, 1. Oktober 2004 (2004-10-01), Seiten 599-609, XP004583527 ISSN: 0959-4388
- HOFMANN M ET AL: "Breaking the diffraction barrier in fluorescence microscopy at low light intensities by using reversibly photoswitchable proteins" PROCEEDINGS OF THE NATIONAL ACADEMY OF SCIENCES OF USA, NATIONAL ACADEMY OF SCIENCE, WASHINGTON, DC, US, Bd. 102, Nr. 49, 6. Dezember 2005 (2005-12-06), Seiten 17565-17569, XP002448241 ISSN: 0027-8424
- MICHAEL J RUST ET AL: "Sub-diffraction-limit imaging by stochastic optical reconstruction microscopy (STORM)" NATURE METHODS, NATURE PUBLISHING GROUP, GB, Bd. 3, Nr. 10, 9. August 2006 (2006-08-09) , Seiten 793-795, XP002492582 ISSN: 1548-7091 [gefunden am 2006-08-09]

## Beschreibung

Verfahren zur räumlich hochauflösenden Lumineszenzmikroskopie einer Probe, die mit Markierungsmolekülen markiert ist, welche mit einem Umschaltsignal derart aktivierbar sind, daß sie erst im aktivierten Zustand zur Abgabe bestimmter Lumineszenzstrahlung anregbar sind, wobei das Verfahren folgende Schritte aufweist:
a) Einbringen des Umschaltsignals auf die Probe derart, daß nur eine Teilmenge der in der Probe vorhandenen Markierungsmoleküle aktiviert werden, wobei in der Probe Teilbereiche bestehen, in denen aktivierte Markierungsmoleküle zu den ihnen nächst benachbarten aktivierten Markierungsmoleküle mindestens einen Abstand haben, der größer oder gleich einer Länge ist, welche sich aus einer vorbestimmten optischen Auflösung ergibt,
b) Anregung der aktivierten Moleküle zur Abgabe von Lumineszenzstrahlung,
c) Detektion der Lumineszenzstrahlung mit der vorbestimmten optischen Auflösung und
d) Erzeugen eines Einzelbildes aus der in Schritt c) aufgenommenen Lumineszenzstrahlung, wobei die geometrischen Orte der Lumineszenzstrahlung abgebenden Markierungsmoleküle mit einer über die vorbestimmte optische Auflösung gesteigerten Ortsauflösung ermittelt werden,
wobei die Schritte mehrfach wiederholt und die so erhaltenen, mehreren Einzelbilder zu einem Gesamtbild zusammenfügt werden.

Ein klassisches Anwendungsgebiet der Lichtmikroskopie zur Untersuchung von biologischen Präparaten ist die Lumineszenzmikroskopie. Hierbei werden bestimmte Farbstoffe (sogenannte Phosphore oder Fluorophore) zur spezifischen Markierung von Proben, z.B. von Zellteilen, verwendet. Die Probe wird, wie erwähnt, mit Anregungsstrahlung darstellender Beleuchtungsstrahlung beleuchtet und die dadurch angeregte Lumineszenzstrahlung mit geeigneten Detektoren erfaßt. Üblicherweise ist dazu im Mikroskop ein dichroitischer Strahlteiler in Kombination mit Blockfiltem vorgesehen, die die Lumineszenzstrahlung von der Anregungsstrahlung abspalten und eine getrennte Beobachtung ermöglichen. Durch dieses Vorgehen ist die Darstellung einzelner, verschieden gefärbter Zellteile im Mikroskop möglich. Natürlich können auch mehrere Teile eines Präparates gleichzeitig mit verschiedenen, sich spezifisch an unterschiedliche Strukturen des Präparates anlagernden Farbstoffen eingefärbt werden. Dieses Verfahren bezeichnet man als Mehrfachlumineszenz. Auch kann man Proben vermessen, die per se, also ohne Farbstoffzugabe lumineszieren.

Lumineszenz wird hier, wie allgemein üblich, als Oberbegriff für Phosphoreszenz und Fluoreszenz verstanden, erfaßt also beide Prozesse. Soweit hier von Fluoreszenz gesprochen wird, ist das pars pro toto und nicht einschränken zu verstehen.

Zur Probenuntersuchung ist es auch bekannt, Laser-Scanning-Mikroskope (auch LSM abgekürzt) zu verwenden, die aus einem dreidimensional ausgeleuchteten Bild mittels einer konfokalen Detektionsanordnung (dann spricht man von einem konfokalen LSM) oder einer nichtlinearen Probenwechselwirkung (sogenannte Multiphotonenmikroskopie) nur diejenige Ebene abbilden, die sich in der Fokusebene des Objektives befindet. Es wird ein optischer Schnitt gewonnen, und die Aufzeichnung mehrerer optischer Schnitte in verschiedenen Tiefen der Probe erlaubt es anschließend, mit Hilfe eines geeigneten Datenverarbeitungsgerätes ein dreidimensionales Bild der Probe zu generieren, das aus den verschiedenen optischen Schnitten zusammengesetzt ist. Die Laser-Scanning-Mikroskopie ist somit zur Untersuchung von dicken Präparaten geeignet.

Natürlich wird auch eine Kombination von Lumineszenzmikroskopie und Laser-Scanning-Mikroskopie verwendet, bei der eine lumineszierende Probe in verschiedenen Tiefenebenen mit Hilfe eines LSM abgebildet wird.

Prinzipiell ist die optische Auflösung eines Lichtmikroskopes, auch die eines LSM, durch die physikalischen Gesetze beugungsbegrenzt. Zur optimalen Auflösung innerhalb dieser Grenzen sind spezielle Beleuchtungskonfigurationen bekannt, wie beispielsweise 4Pi-Anordnung oder Anordnungen mit Stehwellenfeldern. Damit kann die Auflösung, insbesondere in axialer Richtung gegenüber einem klassischen LSM deutlich verbessert werden. Mit Hilfe nicht-linearer Entvölkerungsprozesse kann weiter die Auflösung auf einen Faktor von bis zu 10 gegenüber einem beugungsbegrenzten konfokalen LSM angehoben werden. Ein solches Verfahren ist beispielsweise in der US 5866911 beschrieben. Für die Entvölkerungsprozesse sind verschiedene Ansätze bekannt, beispielsweise wie in der DE 4416558 C2, US 6633432 oder DE 10325460 A1 beschrieben.

Ein weiteres Verfahren zur Auflösungssteigerung wird in der EP 1157297 B1 angesprochen. Dort sollen mittels strukturierter Beleuchtung nichtlineare Prozesse ausgenützt werden. Als Nichtlinearität erwähnt die Druckschrift dabei die Sättigung der Fluoreszenz. Das geschilderte Verfahren nimmt in Anspruch, durch eine strukturierte Beleuchtung eine Verschiebung des Objektraumspektrums relativ zur Übertragungsfunktion des optischen Systems zu realisieren. Konkret bedeutet die Verschiebung des Spektrums, daß Objektraumfrequenzen V0 bei einer Raumfrequenz V0 - Vm, wobei Vm die Frequenz der strukturierten Beleuchtung ist, übertragen werden. Bei gegebener durch das System maximal übertragbarer Raumfrequenz ermöglicht dies den Transfer von um die Verschiebefrequenz Vm über der maximalen Frequenz der Übertragungsfunktion liegender Raumfrequenzen des Objektes. Dieser Ansatz erfordert einen Rekonstruktionsalgorithmus zur Bilderzeugung und die Verwertung mehrerer Aufnahmen für ein Bild. Auch ist bei diesem Verfahren als nachteilig anzusehen, daß die Probe in Bereichen außerhalb des detektierten Fokus unnötig mit Strahlung belastet wird, da die notwendige strukturierte Beleuchtung das gesamte Probenvolumen durchsetzt. Im übrigen kann dieses Verfahren derzeit bei dicken Proben nicht verwendet werden, da außerfokal angeregte Fluoreszenz als Untergrundsignal mit auf den Detektor gelangt und somit den Dynamikbereich der nachgewiesenen Strahlung drastisch reduziert.

Ein Verfahren, das unabhängig von der Laserscanningmikroskopie eine Auflösung jenseits der Beugungsgrenze erreicht, ist aus der WO 2006127692 und der DE 102006021317 bekannt. Dieses mit PALM abgekürzte Verfahren (Photo Activated Light Microscopy) verwendet eine Markierungssubstanz, welche mittels eines optischen Aktivierungssignals aktiviert werden kann. Nur im aktivierten Zustand kann die Markierungssubstanz mit Anregungsstrahlung zur Abgabe von bestimmter Fluoreszenzstrahlung angeregt werden. Nicht aktivierte Moleküle der Markierungssubstanz senden auch nach Einstrahlung von Anregungsstrahlung keine oder zumindest keine merkliche Fluoreszenzstrahlung ab. Die Aktivierungsstrahlung schaltet die Markierungssubstanz also in einen Zustand, in dem sie zur Floureszenz anregbar ist. Auch andere Aktivierung, z.B. thermischer Art, sind möglich. Man spricht deshalb allgemein von einem Umschaltsignal. Im PALM-Verfahren wird nun das Umschaltsignal so aufgebracht, daß zumindest ein gewisser Anteil der aktivierten Markierungsmoleküle von benachbarten aktivierten Molekülen so beabstandet sind, daß sie gemessen an der optischen Auflösung der Mikroskopie getrennt oder nachträglich trennbar sind. Die aktivierten Moleküle werden also zumindest weitgehend isoliert. Nach Aufnahme der Lumineszenzstrahlung wird für diese isolierten Moleküle wird dann das Zentrum deren auflösungsbegrenzt bedingten Strahlungsverteilung ermittelt und daraus rechnerisch die Lage der Moleküle mit höherer Genauigkeit bestimmt, als es die optische Abbildung eigentlich zuläßt. Diese gesteigerte Auflösung durch rechnerische Schwerpunktbestimmung der Beugungsverteilung wird in der englischen Fachliteratur auch als "superresolution" bezeichnet. Sie erfordert, daß in der Probe zumindest einige der aktivierten Markierungsmoleküle mit der optischen Auflösung mit der die Lumineszenzstrahlung detektiert wird, unterscheidbar, also isoliert sind. Dann kann für solche Moleküle die Ortsangabe mit gesteigerter Auflösung erreicht werden.

Zum Isolieren einzelner Markierungsmoleküle nutzt das PALM-Verfahren die Tatsache, daß die Wahrscheinlichkeit, mit der ein Markierungsmolekül nach Empfang des Umschaltsignals gegebener Intensität, z.B. eines Photons der Aktivierungsstrahlung aktiviert wird, für alle Moleküle gleich ist. Über die Intensität des Umschaltsignals und damit die Zahl der Photonen, die auf eine Flächeneinheit der Probe fällt, kann also dafür gesorgt werden, daß die Wahrscheinlichkeit, in einem gegebenen Flächenbereich der Probe vorhandene Markierungsmoleküle zu aktivieren, so gering ist, daß es ausreichend Bereiche gibt, in denen innerhalb der optischen Auflösung nur unterscheidbare Markierungsmoleküle Fluoreszenzstrahlung emittieren. Durch passende Wahl der Intensität, z.B. der Photonendichte, des Umschaltsignals, wird erreicht, daß möglichst nur bezogen auf die optische Auflösung isoliert liegende Markierungsmoleküle aktiviert werden und nachfolgend Fluoreszenzstrahlung aussenden. Für diese isolierten Moleküle wird dann rechnerisch der Schwerpunkt der beugungsbedingten Intensitätsverteilung und damit die Lage des Markierungsmoleküls mit gesteigerter Auflösung ermittelt. Zur Abbildung der gesamten Probe wird die Isolierung der Markierungsmoleküle der Teilmenge durch Einbringen der Aktivierungsstrahlung, nachfolgende Anregung und Fluoreszenzstrahlungsabbildung so lange wiederholt, bis möglichst alle Markierungsmoleküle einmal in einer Teilmenge enthalten und innerhalb des Auflösung der Abbildung isoliert waren.

Das PALM-Verfahren hat dabei den Vorteil, daß weder für die Aktivierung, noch die für Anregung eine hohe Ortsauflösung benötigt wird. Statt dessen kann sowohl die Aktivierung als auch die Anregung in Weitfeldbeleuchtung erfolgen.

Im Ergebnis werden die Markierungsmoleküle durch geeignete Wahl der Intensität der Aktivierungsstrahlung statistisch in Teilmengen aktiviert. Deshalb muß für die Generierung eines Gesamtbildes einer Probe, in dem die Positionen aller Markierungsmoleküle rechnerisch mit z.B. jenseits der Beugungsgrenze liegender Auflösung bestimmt werden können, eine Vielzahl von Einzelbildern ausgewertet werden. Es können bis zu 10.000 Einzelbilder sein. Dies hat zur Folge, daß große Datenmengen verarbeitet werden, und die Messung entsprechend lange dauert. Schon die Aufnahme eines Gesamtbildes erfordert mehrere Minuten, was im wesentlichen durch die Ausleserate der verwendeten Kamera festgelegt ist. Die Positionsbestimmung der Moleküle in den Einzelbildern erfolgt durch aufwendige rechnerische Prozeduren, wie sie beispielsweise in Egner et al., Biophysical Journal, S. 3285-3290, Band 93, November 2007, beschrieben ist. Die Bearbeitung aller Einzelbilder und das Zusammensetzen zu einem hochaufgelösten Gesamtbild, also ein Bild, in dem die Orte der Markierungsmoleküle mit einer jenseits der Beugungsgrenze liegenden Auflösung angegeben sind, dauert typischerweise vier Stunden.

Der Erfindung liegt die Aufgabe zugrunde, ein Verfahren zur PAL-Mikroskopie so weiterzubilden, daß eine schnellere Bildgewinnung erreicht ist

Diese Aufgabe wird durch ein Verfahren gemäß Anspruch 1 gelöst. Es erfolgt eine Regelung der Aufnahme der mehreren Einzelbilder, indem nach einer Ausführung des Schrittes d) zumindest ein Einzelbild oder eine Gruppe der Einzelbilder ausgewertet wird und mindestens eine Stellgröße der Schritte a-d für folgende Wiederholungen der Schritte a-d modifiziert wird.

Erfindungsgemäß wird die Aufnahme der Einzelbilder nun geregelt vorgenommen, indem ein Einzelbild oder eine Gruppe der Einzelbilder ausgewertet wird und aus der Auswertung eine Veränderung einer Stellgröße, die für die Einzelbildaufnahme relevant ist, abgeleitet und die entsprechende Stellgröße entsprechend modifiziert wird.

Die Erfindung nutzt also die besondere Art der Bildgebung beim PALM-Verfahren, das ein hochaufgelöstes Bild sukzessive aus Einzelbildern zusammensetzt, die jeweils eine Untermenge der zu lokalisierenden Moleküle enthalten. Durch die Analyse der Einzelbilder wird nun zumindest ein Parameter für die Bildaufnahme optimiert, so daß die Aufnahme des gesamten Bildes schneller von statten geht.

Im Stand der Technik sind viele Parameter bekannt, die bislang vor dem Beginn eines PALM-Mikroskopievorgangs möglichst optimal eingestellt wurden. Durch die erfindungsgemäße Ableitung von Parameteroptimierungen während der Bildaufnahme durch Auswertung eines oder einer Gruppe von Einzelbildern erfolgt nun eine Regelung der Bildaufnahme hin zu einer höheren Aufnahmegeschwindigkeit.

Dies hat nicht nur den Vorteil, daß die Bildaufnahme insgesamt schneller abläuft, sondern auch die Vorbereitungszeit für die Aufnahme eines Bildes ist reduziert. Es muß weniger Aufwand betrieben werden, die Rahmenbedingungen für Betriebsparameter vorher sorgfältig zu ermitteln, um die Bildaufnahmeparameter gleich von Anfang an auf einen optimalen Wert einzustellen. Die optimalen Werte ergeben sich aus der erfindungsgemäßen Regelung während der Bildaufnahme.

Ein weiterer Vorteil des erfindungsgemäßen Vorgehens liegt auch darin, daß sich die Randbedingung, welche sich auf optimale Bildaufnahmeparameter auswirken, nun ohne Auswirkungen auf die Aufnahmezeit während der Bildaufnahme ändern können. Ein einfaches Beispiel hierfür ist die Verschiebung der Probe zur Wahl eines anderen Bildausschnittes, die Probenbereiche mit unterschiedlicher Konzentration von Markierungsmolekülen und damit auch zwangsläufig unterschiedlich optimaler Umschaltsignalintensität in das aktuelle Bildfeld bringen kann. Das erfindungsgemäße dynamische Optimierungsverfahren durch die Regelung von Bildaufnahmeparametern als Ergebnis einer Einzelbildanalyse ist sichergestellt, daß auch bei variierenden Randbedingungen stets schnell die optimalen Bildaufnahmeparameter erreicht werden und somit insgesamt die Zeit zur Aufnahme eines Bildes reduziert ist.

Eine Variation der Rahmenbedingungen kann sich natürlich auch aus Stabilitätsgrenzen der Aperatur oder der Probe geben, z.B. Fokus-Drifts oder Temperaturänderungen. Auch diese sind nun ohne Auswirkung auf die Aufnahmedauer, daß die Bildaufnahme in der Regelung automatisch reagiert.

Über die Optimierung hinaus kann die erfindungsgemäße Regelung auch Geräteschutzfunktionen gewährleisten. So sind die üblicherweise verwendeten hochempfindlichen Detektoren oder Kameras durch etwaige Falscheinstellungen an Filtern, Anregungsleistung im Verhältnis zur Fluoreszenz etc., versehentlich leicht zu schädigen. Die Regelung während der Aufnahme des Gesamtbildes verhindert solche Schäden.

Bei der PALM-Bildaufnahme steht das Verhältnis von Aktivierung und De-Aktivierung (z.B. durch Bleichen) der Markierungsmoleküle in einem engen Zusammenhang mit der gesamten Bildaufnahmegeschwindigkeit. Es ist bereits in der WO 2006/127692 A2 beschrieben, daß eine asynchrone Aktivierung und Fluoreszenz-Anregung der Geschwindigkeitsoptimierung dienen kann. Die DE 102006021317 B3 gibt sogar Prozentangaben, die sich auf den Teil der konvertierten Moleküle beziehen, die bezogen auf die optische Auflösung des Mikroskops voneinander getrennt, also disjunkt sind. Diese festen Vorgaben sind mit der Erfindung überflüssig und sind allenfalls Startwerte.

Aus den Einzelbildern werden Werte für optimale Meßparameter abgeleitet und durch entsprechende Stellgrößenveränderungen während den folgenden Einzelbildaufnahmen hinsichtlich der Bildaufnahmegeschwindigkeit oder anderer Kriterien (z.B. des erwähnten Geräteschutzes) geregelt. Ein neuer Einzelbildaufnahmezyklus wird also mit Einstellungen durchgeführt, die aufgrund der vorherigen Einzelbildanalyse modifiziert wurden und zu optimaleren (z.B. schnelleren) Aufnahmen führen.

Dabei muß nicht unbedingt eine Beschleunigung auf Einzelbildebene erfolgen. Eine verringerte Aufnahmedauer kann vor allem auch dadurch erreicht werden, daß weniger Einzelbilder benötigt werden, z.B. weil die Aufteilung in Teilmengen verbessert ist.

Für eine Beschleunigung der Gesamtbildaufnahme ist die Verteilung der aktivierten (und dann später fluoreszierenden) Markierungsmoleküle auf die Teilmengen (jede Teilmenge entspricht dann einem Einzelbild) wesentlich. Es ist deshalb vorgesehen, daß zur Regelung eine Gütefunktion ausgewertet und deren Wert maximiert wird, die direkt oder indirekt ein Maß für den Anteil der Markierungsmoleküle in der Probe ist, welche aktiviert sind und zu den ihnen nächst benachbarten aktivierten Markierungsmolekülen mindestens einen Abstand haben, der mit der vorbestimmten optischen Auflösung auflösbar ist. Die Gütefunktion kann dabei insbesondere ein Dichtemaß für die aktivierten und damit fluoreszierende Moleküle sein. Eine möglichst homogene Helligkeit der fluoreszierenden Moleküle im Einzelbild ist ein Indiz und damit mögliches Gütemaß für eine hinsichtlich der Bildaufnahmegeschwindigkeit geeignete Bildaufnahme.

Folgende Überlegung führt zu einer besonders geeigneten Gütefunktion: Idealerweise trägt zur Lumineszenz innerhalb eines örtlich auflösbaren Bereichs/Volumens nur ein einziges Markierungsmolekül bei. Grundsätzlich kann in einem örtlich auflösbaren Volumen nur eine ganzzahlige Anzahl von Molekülen vorliegen. Innerhalb eines durch die örtliche Auflösung definierten Gebietes kann also nur Lumineszenzstrahlung auftreten, die entweder von einem, von zwei, von drei etc. Markierungsmolekülen stammt. Eine Lumineszenzauswertung innerhalb eines lumineszierenden Gebietes, das von benachbarten lumineszierenden Gebieten isoliert ist, erlaubt es also, durch eine Schwellwertanalyse zu erkennen, ob in dem lumineszierenden Gebiet ein Markierungsmolekül lag oder mehrere. Es ist deshalb in einer Weiterbildung bevorzugt, daß zur Auswertung der Gütefunktion in jedem der ausgewerteten Einzelbilder lumineszierte Gebiete identifiziert werden, die von benachbarten lumineszierenden Gebieten isoliert sind, in den isolierten lumineszierten Gebieten ein Maß für die Menge der vom jeweiligen isolierten lumineszierenden Gebiet abgegebenen Lumineszenzstrahlung ermittelt wird, und der Anteil der Gebiete, für die ein unter einem Schwellwert liegendes Maß ermittelt wurde, als Wert der Gütefunktion genommen wird. Der Schwellwert ist dabei zweckmäßigerweise so zu wählen, daß er geringfügig über dem Lumineszenzmengenmaß liegt, das einem Gebiet entspricht, in dem nur ein Markierungsmolekül Lumineszenzstrahlung abgab.

Das Maß für die abgegebene Lumineszenzstrahlung kann das Integral der Lumineszenzintensität über das identifizierte Gebiet sein. Auch andere Parameter sind möglich. Verwendet man als Maß das Maximum der im lumineszierenden Gebiet auftretenden Lumineszenzintensität, zeigt sich, daß das Verfahren besonders unempfindlich gegen Defokussierungen ist.

Bei der Aufnahme eines Bildes spielt natürlich immer Hintergrundrauschen eine Rolle. Soweit in dieser Beschreibung von isolierten Gebieten die Rede ist, ist deshalb darunter zu verstehen, daß die aufgenommene Intensität unter einen Schwellwert sinkt, der jedoch aufgrund von Hintergrundrauschen nicht notwendigerweise Null sein muß.

Es ist deshalb bevorzugt, daß das Maß für die Menge der abgegebenen Lumineszenzstrahlung ein Integral über die Lumineszenzstrahlungsintensität oder das Maximum der Lumineszenzstrahlungsintensität, jeweils im identifizierten isolierten lumineszierenden Gebiet, ist.

Ein weiterer möglicher Indikator für die Dichte der lumineszierenden Markierungsmoleküle ist der Abstand, den ein lumineszierendes Gebiet zum nächst benachbarten lumineszierenden Gebiet hat. Dieser Abstand kann beispielsweise durch einen geeigneten Kreisfit um ein identifiziertes lumineszierendes Gebiet gemessen werden.

Bevorzugt wird der minimale Abstand eines identifizierten isolierten lumineszierenden Gebietes zum nächst benachbarten lumineszierenden Gebiet bestimmt, und der Anteil der Gebiete, deren minimale Abstand größer ist als ein durch die vorbestimmte optische Auflösung vorgegebener auflösbarer Mindestabstand oder ein vorgegebenes Vielfaches dieses Mindestabstandes ist, als Wert der Gütefunktion genommen wird.

Ein alternativer Ansatz ist es, zu prüfen, ob die gesamte aufgenommene Strahlung um ein lokales Fluoreszenzintensitätsmaximum herum innerhalb eines bestimmten Abstandes um das lokale Maximum liegt. Rührt das lokale Intensitätsmaximum von einem lumineszierenden Markierungsmolekül her und ist dieses Markierungsmolekül isoliert, so wird jenseits der Auflösungsgrenze die Lumineszenzintensität auf einen durch das Hintergrund rauschende definierten Mindestwert abgefallen sein. Ist hingegen bei einem vorgegebenen Abstand um das lokale Maximum ein solcher Schwellwert noch nicht erreicht, rührt das Maximum entweder von mehr als einem lumineszierenden Markierungsmolekül her, oder es befindet sich in nicht optisch auflösbarem Abstand noch ein weiteres lumineszierendes Markierungsmolekül.

Es ist deshalb bevorzugt, daß zur Auswertung der Gütefunktion in jedem der ausgewerteten Einzelbilder lumineszierende Gebiete ermittelt werden, die von benachbarten lumineszierenden Gebieten isoliert sind, und für jedes dieser isoliertem lumineszierenden Gebiete die Größe dieses lumineszierenden Gebietes bezogen auf ein durch die optische Auflösung vorgegebenes Maß ermittelt und derjenige Anteil an der Gesamtfläche des Einzelbildes als Maß für die Gütefunktion verwendet wird, den lumineszierende Gebiete ausmachen, deren Ausdehnung um ihr lokales Maximum geringer ist als eine aus der optischen Auflösung abgeleiteten Größe, insbesondere ein vorgegebenes Vielfaches der kleinsten auflösbaren Länge.

Für diese beiden Varianten kann ein Kreis um das geometrische Zentrum oder das lokale Intensitätsmaximum des jeweiligen lumineszierenden Gebietes gelegt werden, innerhalb dem die Lumineszenzintensität auf einen bestimmten Mindestwert abgefallen sein muß, oder der bis zum nächst benachbarten lumineszierenden Gebiet reicht. Der Anteil der Gebiete, deren Lumineszenzintensität innerhalb eines vorgegebenen Kreisradius unter den Maximalwert gefallen ist, bzw. der Anteil der Gebiete, deren Kreisradius größer ist als der auflösbare Mindest-Abstand oder ein vorgegebenes Vielfaches des Mindest-Abstandes ist, wird als Wert der Gütefunktion genommen.

Prinzipiell kann das Verfahren jedes Einzelbild individuell analysieren, d.h. es kann auch von Einzelbild zu Einzelbild zwischen den geschilderten Bildauswertungsansätzen gewechselt werden. Bevorzugt ist jedoch im Sinne der Stabilität der Regelung, daß immer dieselbe Art der Einzelbildauswertung vornimmt. Weiter ist es hinsichtlich der Stabilität vorteilhaft, wenn eine Gruppe aufeinanderfolgender Einzelbilder ausgewertet wird, in jedem der ausgewerteten Einzelbilder lumineszierende Gebiete isoliert werden, die von benachbarten lumineszierenden Gebieten isoliert sind, und der Anteil der lumineszierenden Gebiete, die genau in einem Einzelbild der Gruppe lumineszieren, als Wert der Gütefunktion genommen wird.

Die beeinflußte Stellgröße umfaßt mindestens einen der folgenden Parameter Filterung, Polarisationsfilterung, Verstärkung, Detektortemperatur, Integrationsdauer, Detektionsfeldwahl, Fokuslage und -größe bei der Detektion der Lumineszenzstrahlung, Leistung, Pulsform, Pulsfrequenz, Wellenlängen, Bestrahlungsdauer, Bestrahlungsfeldwahl, Eindringtiefe eine TIRF-Beleuchtung, Fokuslage und -größe beim Einbringen des Umschaltsignals oder bei der Anregung der aktivierten Moleküle.

In der Bildauswertung kann mindestens eine der folgenden Größen erfaßt und ausgewertet werden: Bleichrate der Markierungsmoleküle, Anregungs- und Emissionsspektren der Markierungsmoleküle, Lebensdauer von Lumineszenzzuständen der Markierungsmoleküle, Aktivierungsschwelle der Markierungsmoleküle, Blinkrate der Markierungsmoleküle, Zeit, über die einzelne Markierungsmoleküle im Mittel sichtbar sind, Anzahl an innerhalb der optischen Auflösung zusammenfallenden, lumineszierenden Markierungsmolekülen, Anzahl der gesammelten Photonen pro lumineszierendem Markierungsmolekül, Anzahl der aktivierten Markierungsmolekülen pro Einzelbild, mittlere Lokalisierungsgenauigkeit der Markierungsmoleküle pro Einzelbild.

Ein weiterer Optimierungsansatz im Rahmen der Regelung überprüft, wie lange ein Molekül fluoresziert. Idealerweise trägt ein aktiviertes und angeregtes Markierungsmolekül nur genau zu einem Einzelbild bei, da dann die Wahrscheinlichkeit, daß möglichst viele Markierungsmoleküle disjunkt sind, maximal ist. Moleküle, die über mehr als ein Einzelbild zur Lumineszenzstrahlung angeregt werden können, könnten mit im nächsten Schritt hinzutretenden, d.h. neu aktivierten Markierungsmolekülen zu einem nicht trennbaren lumineszierenden Gebiet zusammenwachsen. Dies ist unerwünscht. Die geschilderte Variante optimiert deshalb die Anzahl der Einzelmoleküle, die genau ein Einzelbild Lumineszenzstrahlung abgeben. Bei einer De-Aktivierung von Markierungsmolekülen durch Bleichen, d.h. durch eine Anregung, die so stark ist, daß das Markierungsmolekül dauerhaft oder zumindest zeitweise nicht wieder zur Lumineszenz angeregt werden kann, kann die Optimierung der Markierungsmoleküle, die für ein Einzelbild Lumineszenzstrahlung abgeben, durch Erhöhung der Anregungsintensität erreicht werden. Diese Variante ist ein Beispiel dafür, daß die Stellgröße nicht automatisch bei der Aktivierung der Markierungsmoleküle eingreifen muß, sondern durchaus auch auf die Anregung wirken kann.

Eine weitere Größe, die besonders vorteilhaft für die Steigerung der Bildaufnahmegeschwindigkeit ist, ist die Synchronisation von Detektion und Aktivierung bzw. Anregung. Insbesondere sind Farbstoffeigenschaften, wie z.B. Bleichrate, Schaltzyklen, Anregungs- und Emmisionsspektren, Lebensdauer etc. für optimale PALM-Bildaufnahmen von Bedeutung. Im Mittel sollte die Dauer, für die ein einzelnes Markierungsmolekül im zur lumineszenzanregbaren Zustand verweilt, zur Detektion der Lumineszenzstrahlung im Schritt c) und dort insbesondere zu einer Belichtungsdauer so abgestimmt sein, daß das Markierungsmolekül möglichst innerhalb eines Detektionsschrittes c) seine Lumineszenzstrahlung abgibt und nicht teilweise in Detektionsschritte für zwei aufeinanderfolgende Einzelbilder fällt. Da bei einer optimierten Bildaufnahmegeschwindigkeit die meisten lumineszierenden Markierungsmoleküle nur in sehr wenigen Frames eines Detektionsschrittes sichtbar sind, stellen die beiden Randframes (Frames, in denen ein Molekül die Lumineszenz beginnt bzw. beendet) signifikante Anteile des insgesamt aufgesammelten Lumineszenzsignals dar. Um die Frames bei der Bildaufnahme und damit z.B. die Integrationszeit einer CCD-Kamera möglichst optimal auszunutzen, ist deshalb eine zeitliche modulierte Intensität der Aktivierungsstrahlung zum Detektor in Schritt c), z.B. zum Betrieb einer Kamera, synchronisiert vorzunehmen, so daß die Anregungswahrscheinlichkeit eines Moleküls möglichst zu Beginn eines Frames liegt.

Für manche Arten fotoschaltbarer Proteine ist deren mittlere Anregbarkeitsspanne vor einem reversiblen oder irreversiblen De-Aktivieren eine Funktion der Beleuchtungsbedingungen. Von einem Hintergrundsignal unterscheidet sich die Lumineszenzstrahlung der fotoschaltbaren Proteine durch ihr Bleichverhalten. Ein zuvor ermitteltes Bleichverhalten kann also benutzt werden, die Markierungsmoleküle von Hintergrundstrahlung zu unterscheiden. Alternativ kann die Lebensdauer verwendet werden. Diese Informationen können dazu verwendet werden, Grenzen für den Regelbereich vorzugeben.

Es versteht sich, daß die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielsweise anhand der beigefügten Zeichnungen, die auch erfindungswesentliche Merkmale offenbaren, noch näher erläutert. Es zeigen:
- Fig. 1: eine Schemadarstellung eines aktivierten Markierungsmoleküls in einem auflösungsbegrenzten Volumen;
- Fig. 2: eine Schemadarstellung der Abbildung verschiedener aktivierter und nicht-aktivierter Markierungsmoleküle auf einen ortsauflösenden Detektor,
- Fig. 3: ein Ablaufdiagramm für die Bilderzeugung im PALM-Verfahren,
- Fig. 4: zum Ablaufdiagramm der Fig. 3 gehörende Erläuterungsdarstellungen von auf den Detektor der Fig. 2 abgebildeten Markierungsmolekülen,
- Fig. 5: ein Schemadarstellung eines Mikroskop zur PAL-Mikroskopie,
- Fig. 6: ein Ablaufdiagramm für die Bilderzeugung im PALM-Verfahren mit Regelung von Bildgewinnungsparametern und
- Fig. 7: ein Mikroskop ähnlich dem der Fig. 4, das zur Auswahl von Probenbereichen weitergebildet ist.

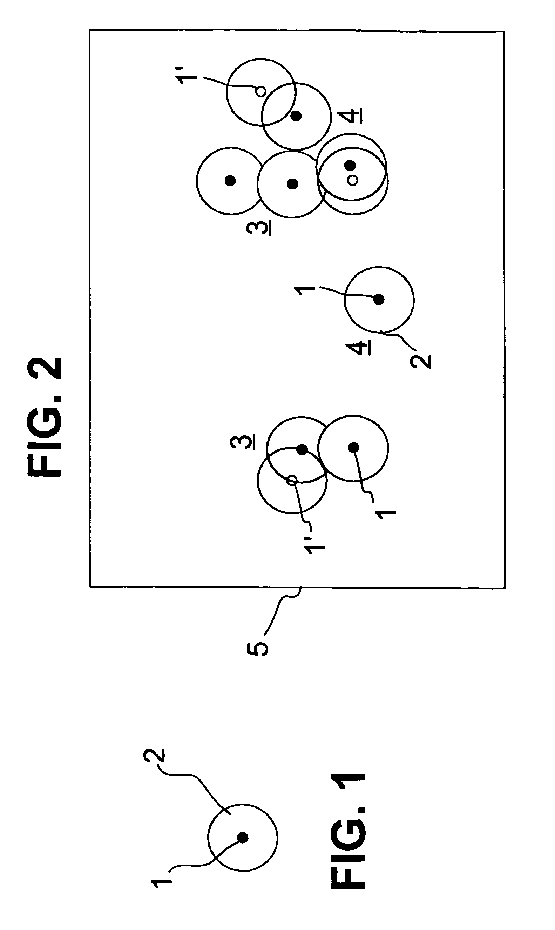

Fig. 1 zeigt schematisch ein Markierungsmolekül 1, das zur Fluoreszenz angeregt wurde. Natürlich erfordert die Fluoreszenzdetektion eine Vielzahl von Anregungen, da jede Anregung genau ein Fluoreszenzphoton liefert und die Strahlungsdetektion eine Integration vieler Fluoreszenzphotonen benötigt. Die vom Markierungsmolekül 1 abgegebene Fluoreszenzstrahlung kann in einem Mikroskop aufgrund physikalischer Prinzipien lediglich mit einer begrenzten optischen Auflösung detektiert werden. Selbst wenn das Mikroskop die Beugungsgrenze der optischen Auflösung erreicht, werden die Photonen des fluoreszierenden Markierungsmolekül 1 immer noch beugungsbedingt gestreut und somit in einen Beugungsscheibchen 2 detektiert. Das Mikroskop gibt also prinzipiell statt der geometrischen Ausdehnung des Markierungsmoleküls 1, die in Fig. 1 schematisch als schwarzer Kreis gezeichnet ist, ein größeres Objekt wieder, das in Fig. 1 durch das Beugungsscheibchen 2 veranschaulicht ist. Die Größe des Beugungsscheibchens 2 hängt von der Güte der verwendeten Mikroskopieeinrichtung ab und ist durch die Halbwertsbreite der Punktverwaschungsfunktion der optischen Abbildung definiert. Tatsächlich handelt es sich natürlich nicht um ein zweidimensionales Objekt, sondern um ein Beugungsvolumen in das die Fluoreszenzphotonen gelangen. In der zweidimensionalen Darstellung der Fig. 1 erscheint dieses aber als Scheibchen. Der Begriff Beugungsscheibchen wird hier deshalb ganz allgemein für ein maximales Auflösungsvolumen genommen, welches die verwendete Optik erzielen kann. Die verwendete Optik muß aber nicht zwingend an der Beugungsgrenze arbeiten, auch wenn dies zu bevorzugen ist.

Um nun das Markierungsmolekül 1 innerhalb des Beugungsscheibchens 2 genauer lokalisieren zu können, wird das oben bereits allgemein geschilderte PALM-Verfahren eingesetzt. Dieses aktiviert einzelne Markierungsmoleküle, wobei in dieser Beschreibung ganz allgemein unter dem Begriff Aktivierung die Aktivierung bestimmter Lumineszenzeigenschaften der Markierungsmoleküle verstanden wird, also sowohl ein Einschalten der Lumineszenzanregbarkeit als auch eine Änderung des Lumineszenzemissionsspektrum, was dem Einschalten bestimmter Lumineszenzeigenschaften entspricht. Im hier beschriebenen Ausführungsbeispiel wird die Aktivierung durch optische Aktivierungsstrahlung bewirkt. Es sind aber auch andere nicht-optische Aktivierungsmechanismen möglich.

Die Aktivierung erfolgt nun so, daß es zumindest einige aktivierte Moleküle gibt, deren Schwerpunkt nicht im Beugungsscheibchen anderer aktivierter Moleküle liegt, d.h. die innerhalb des optischen Auflösung zumindest gerade noch unterscheiden werden können.

Fig. 2 zeigt schematisch eine exemplarische Situation auf einem Detektor 5, der die Photonen ortauflösenden integriert. Wie zu sehen ist, gibt es Bereiche 3, in denen die Beugungsscheibchen benachbarter Markierungsmoleküle überlappen. Hierbei sind, wie im linken Bereich 3 der Fig. 2 zu sehen ist, jedoch lediglich diejenigen Markierungsmoleküle relevant, die zuvor aktiviert wurden. Nicht aktivierte Markierungsmoleküle 1' geben die bestimmte Fluoreszenzstrahlung, welche auf dem Matrix-Detektor 5 aufgefangen wird, nicht ab, spielen also keine Rolle.

In den Bereichen 4, z.B. dem in der Mitte des Matrix-Detektors 5 gelegenen Bereiches 4, liegen Markierungsmoleküle 1 so, daß ihr Beugungsscheibchen 2 mit keinem Beugungsscheibchen eines anderen aktivierten Markierungsmolekül 1 überlappt. Der rechte Bereich des Matrix-Detektors 5 zeigt, daß Bereiche 3, in denen Beugungsscheibchen von aktivierten Markierungsmolekülen überlappen, zu Bereichen 4, in denen dies nicht der Fall ist, durchaus benachbart liegen können. Der rechte Bereich 4 verdeutlicht zudem, daß die Nachbarschaft eines aktivierten Markierungsmoleküls 1 zu einem nicht aktivierten Markierungsmolekül 1' für die Detektion keine Rolle spielt, da ein solches Markierungsmolekül 1' ja die vom Matrix-Detektor 5 detektierte Fluoreszenzstrahlung nicht abgibt, also nicht fluoresziert.

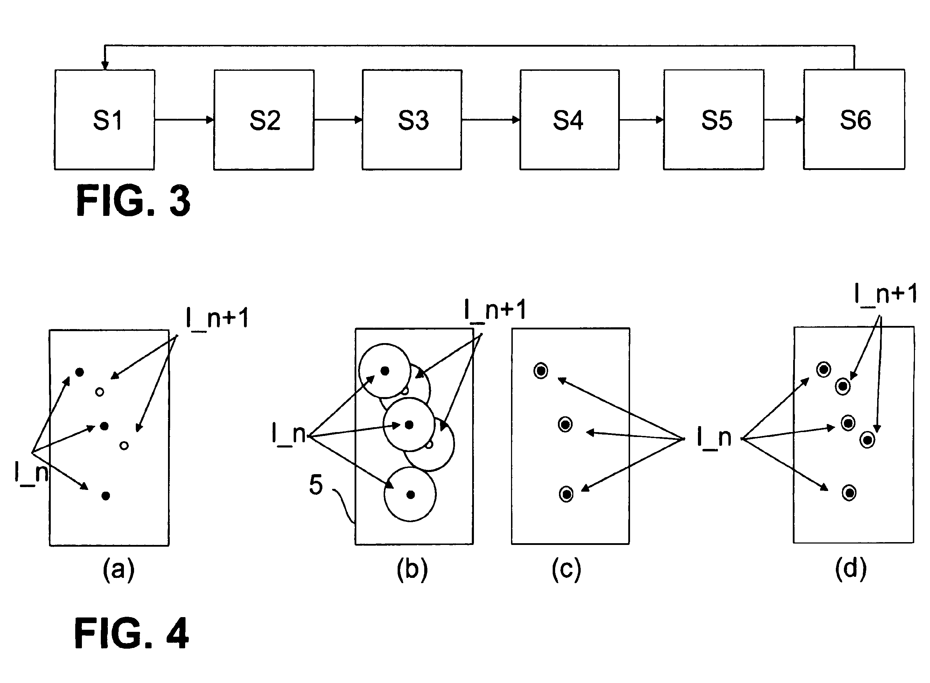

Zur Aufnahme eines jenseits der apparativ vorgegebenen optischen Auflösung detaillierten Bildes, das im Sinne dieser Beschreibung ein hochaufgelöstes Bild ist, werden nun die in Fig. 3 schematisch dargestellten Schritte eingesetzt.

In einem ersten Schritt S1 wird mittels eines Umschaltsignals eine Teilmenge der Markierungsmoleküle aktiviert; sie werden also von einem ersten Zustand, in dem sie zur Abgabe der bestimmten Fluoreszenzstrahlung nicht anregbar sind, in einen zweiten Zustand geschaltet, in dem sie zur Abgabe der bestimmten Fluoreszenzstrahlung anregbar sind. Natürlich kann das Aktivierungssignal auch eine selektive Deaktivierung bewirken, also in Schritt S1 auch ein inverses Vorgehen verwendet werden. Wesentlich ist, daß nach Schritt S1 lediglich eine Teilmenge der Markierungsmoleküle zur Abgabe der bestimmten Fluoreszenzstrahlung angeregt werden kann. Die Aktivierung bzw. Deaktivierung (nachfolgend wird zur Vereinfachung lediglich der Fall der Aktivierung geschildert) erfolgt abhängig von den verwendeten Markierungsmolekülen. Bei einem Farbstoff wie z.B. DRONPA, PA-GFP oder reversibel schaltbaren synthetischen Farbstoffen (wie Alexa/Cyan-Konstrukten) erfolgt die Aktivierung durch optische Strahlung, ist das Umschaltsignal also Umschaltstrahlung.

Die unter der Fig. 3 dargestellte Fig. 4 zeigt im Teilbild a den Zustand nach Schritt S1. Lediglich eine Teilmenge der Markierungsmoleküle l_n ist aktiviert. Die Markierungsmoleküle dieser Teilmenge sind mit einem voll ausgezeichneten schwarzen Punkt wiedergegeben. Die restlichen Markierungsmoleküle sind in diesem Schritt nicht aktiviert worden. Sie sind in Teilbild a der Fig. 4 mit l_n+1 bezeichnet.

Markierungsmoleküle, die aktiviert wurden, können dann in einem zweiten Schritt S2 zur Abgabe von Fluoreszenzstrahlung angeregt werden. Als Fluoreszenzfarbstoffe werden vorzugsweise aus dem Stand der Technik bekannte fluoreszierende Proteine, wie PA-GFP oder auch DRONPA verwendet. Die Aktivierung erfolgt bei solchen Molekülen mit Strahlung im Bereich von 405 nm, die Anregung zur Fluoreszenzstrahlung bei einer Wellenlänge von etwa 488 nm, und die Fluoreszenzstrahlung liegt in einem Bereich oberhalb von 490 nm.

In einem dritten Schritt S3 wird die abgegebene Fluoreszenzstrahlung detektiert, beispielsweise durch Integration der aufgenommenen Fluoreszenzphotonen, so daß sich die im darunter liegenden Teilbild b der Fig. 4 dargestellte Situation auf dem Matrix-Detektor 5 ergibt. Wie zu sehen ist, überlappen die Beugungsscheibchen der aktivierten Markierungsmoleküle l_n nicht. Die Größe der Beugungsscheibchen wird durch die optische Auflösung der Abbildung auf den Matrix-Detektor 5 festgelegt. Zusätzlich sind in Teilbild b der Fig. 4 (theoretische) Beugungsscheibchen von Fluoreszenzmolekülen eingezeichnet, die zur nicht-aktivierten Gruppe l_n+1 gehören. Da diese nicht-aktivierten Markierungsmoleküle keine Fluoreszenzstrahlung abgeben, stört keine in deren (theoretischen) Beugungsscheibchen liegende Fluoreszenzstrahlung die Detektion der Fluoreszenzstrahlung der Teilmenge l_n der aktivierten Markierungsmoleküle.

Damit in der Teilmenge l_n möglichst wenige Beugungsscheibchen so überlappen, daß die Markierungsmoleküle gar nicht mehr unterscheidbar sind, wird die Aktivierungsenergie so eingestellt, daß die Teilmenge l_n nur einen vergleichsweise geringen Anteil der Gesamtmenge der Markierungsmoleküle ausmacht, so daß statistisch viele Markierungsmoleküle bezogen auf das mit der optischen Anordnung auflösbare Volumen unterscheidbar sind.

In einem vierten Schritt S4 wird die Lage der floureszenzierenden Markierungsmoleküle rechnerisch aus der Beugungsverteilung der Floureszenzscheibchen ermittelt, wodurch die Auflösung, mit der die Lage der aktivierten Markierungsmoleküle bekannt ist, über die Auflösung der optischen Anordnung hinaus geschärft wird, wie das Teilbild c der Fig. 4 zeigt.

Alternativ ist zu einer rechnerischen Bestimmung ist es ganz grundsätzlich möglich, die aufgenommene Fluoreszenzstrahlung nichtlinear zu verstärken und so mit verringertem Aufwand die Auflösung über die optischen Anordnung hinaus zu schärfen. Die nichtlineare Verstärkung kann beispielsweise gemäß der Funktion S = A • F^{N} (Gleichung 1) oder S = A • exp^{F/W} (mit w = 10^{-N} (Gleichung 2)) beschrieben werden, wobei F die Amplitude des Fluoreszenzsignals, A ein Normierungsfaktor und N eine ganze Zahl größer 1 ist. Besonders vorteilhaft ist eine starke nichtlineare Abhängigkeit des Parameters S von F, also z.B. hohe Werte für N in den Gleichungen 1 oder 2. Natürlich können auch andere Funktionen verwendet werden. Grundsätzlich ist die Nichtlinearität vorzugsweise so gewählt, daß die Halbwertsbreite der Beugungsscheibe einer angestrebten räumlichen Auflösung für die Ortsangabe der Markierungsmoleküle entspricht. Neben einer nichtlinearen Verstärkung kann auch eine nichtlineare Dämpfung verwendet werden. Hierbei werden Fluoreszenzsignale geringer Amplitude oder Intensität gedämpft, wohingegen starke Signale zumindest weitgehend ungedämpft bleiben. Natürlich kann auch eine Kombination von nichtlinearer Verstärkung und Dämpfung verwendet werden.

Ein fünfter Schritt S5 setzt die Markierungsmoleküle, deren Lageangabe präzisiert ist, nun zu einem Einzelbild zusammen, dessen Ortsauflösung über die optische Auflösung hinaus gesteigert ist. Es enthält allerdings nur Informationen über die zuvor aktivierte Teilmenge der Markierungsmoleküle.

In einem sechsten Schritt S6 wird das Einzelbild auf bekannte Weise in ein Gesamtbild eingestellt. Anschließend wird zu Schritt S1 zurückgesprungen, wobei die bisher floureszierenden Moleküle wieder deaktiviert sein müssen. Eine Deaktivierung kann je nach Markierungsmolekülart durch eine separate Strahlung oder durch Abklingen des Aktivierungszustandes erreicht werden. Auch ist es möglich bereits abgebildete Markierungsmoleküle durch Anregungsstrahlung zu bleichen.

Mit jedem Durchlauf wird so ein weiteres Einzelbild erhalten, das zum Gesamtbild beiträgt. Im nächsten Durchlauf wird eine andere Teilmenge der Markierungsmoleküle aktiviert, z.B. die in Fig. 4 dargestellt Teilmenge l_n+1.

Durch den mehrfachen Durchlauf durch die Schritte S1 bis S6 wird das Gesamtbild aus Einzelbildern der einzelnen Durchläufe aufgebaut, welche die Orte der Markierungsmoleküle mit einer Ortsauflösung angeben, die gegenüber der Auflösung der optischen Abbildung geschärft ist. Durch eine entsprechende Anzahl von Iterationen baut sich somit ein hochaufgelöstes Gesamtbild sukzessive auf. Die Reduktion des Beugungsscheibchens erfolgt dabei bei dem Verfahren vorzugsweise in allen drei Raumdimensionen, wenn mehrere Bildstapel, welche in z-Richtung beabstandet sind, aufgenommen werden. Dann enthält das Gesamtbild in allen drei Raumrichtungen hochaufgelöst die Ortsangabe der Markierungsmoleküle.

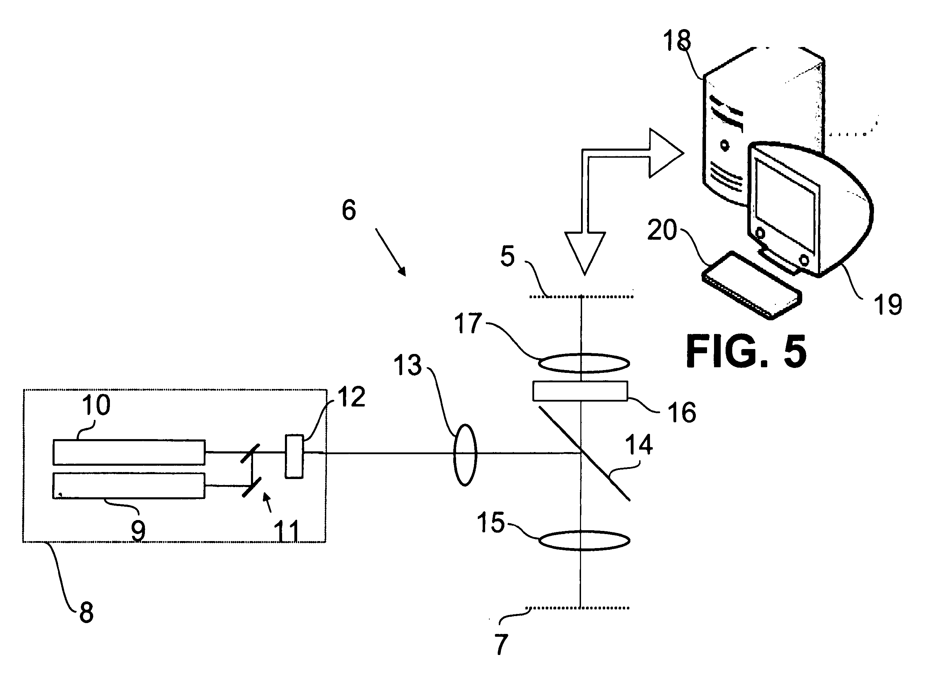

Fig. 5 zeigt schematisch ein Mikroskop 6 zur hochauflösenden Abbildung einer Probe 7. Die Probe ist beispielsweise mit dem Farbstoff DRONPA (vergleiche WO 2007009812 A1) markiert. Zur Aktivierung sowie zur Fluoreszenzanregung weist das Mikroskop 6 eine Strahlungsquelle 8 auf, die über einzelne Laser 9 und 10 verfügt, deren Strahlen über einen Strahlvereiniger 11 zusammengeführt wird. Die Laser 9 und 10 können beispielsweise bei 405 nm (Aktivierungsstrahlung) und 488 nm (Fluoreszenzanregung und Deaktivierung) Strahlung abgeben. Es sind auch Farbstoffe bekannt (z.B. der Farbstoff namens DENDRA (vgl. Gurskaya et al., Nature Biotech., Band 24, S. 461-465, 2006)), bei denen die Aktivierung und Fluoreszenzanregung bei ein- und derselben Wellenlänge erfolgen kann. Dann genügt ein Laser.

Ein akustisch-optischer Filter 12 dient zur Wellenlängenselektion und zum schnellen Schalten oder Abschwächen einzelner Laserwellenlängen. Eine Optik 13 fokussiert die Strahlung über einen dichroitischen Strahteiler 14 in eine Pupille eines Objektivs 15, so daß auf der Probe 7 die Strahlung der Strahlungsquelle 8 als Weitfeldbeleuchtung einfällt.

In der Probe 7 entstehende Fluoreszenzstrahlung wird über das Objektiv 15 eingesammelt. Der dichroitische Strahlteiler 14 ist so ausgelegt, daß er die Fluoreszenzstrahlung passieren läßt, so daß sie durch ein Filter 16 zu einer Tubuslinse 17 gelangt, so daß insgesamt die fluoreszierende Probe 7 auf den Detektor 5 abgebildet wird.

Zur Steuerung des Betriebs des Mikroskops 6 ist eine Steuereinrichtung vorgesehen, hier als Computer 18 mit Anzeige 19 und Tastatur 20 ausgebildet. Die Verfahrensschritte S2 bis S6 erfolgen im Computer 18. Dabei ist die Bildrate des Matrix-Detektors ausschlaggebend für die Gesamtmeßzeit, so daß ein Matrix-Detektor 5 mit möglichst hoher Bildrate vorteilhaft ist, um die Meßzeit zu reduzieren.

Das beschriebene Verfahren realisiert mit dem Mikroskop 6 ein Gesamtbild, das z.B. eine um Faktor 10 gegenüber der optischen Auflösung des Mikroskops gesteigerte Ortsauflösung hat. Die optische Auflösung des Mikroskops 6 kann beispielsweise 250 nm lateral und 500 nm axial betragen.

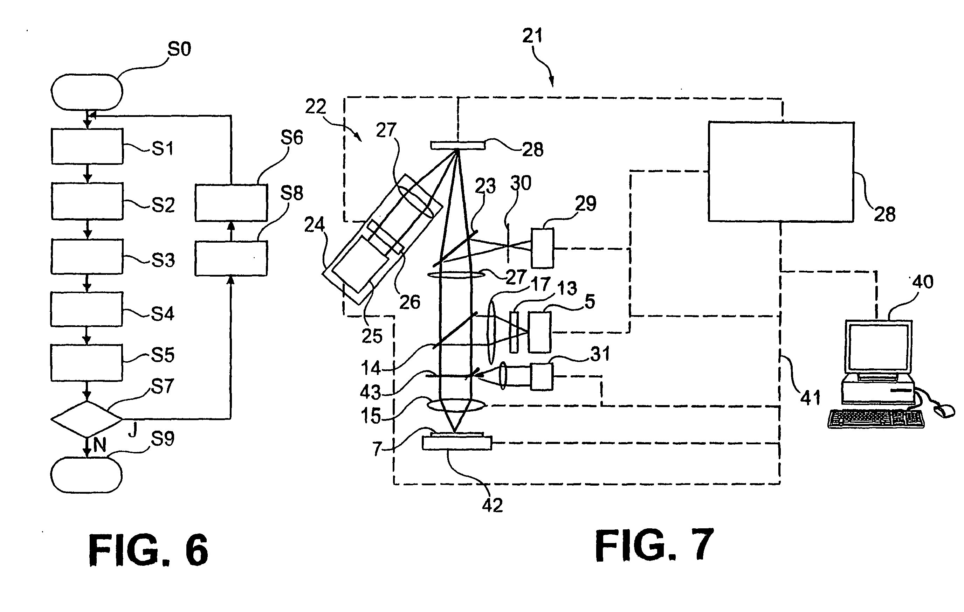

Für den Betrieb des Mikroskops 6 zur PAL-Mikroskopie ist es natürlich wesentlich, daß der Anteil an isolierten Markierungsmolekülen 1 möglichst hoch ist, da dann wenig Einzelbilder vonnöten sind und die Bildaufnahmegeschwindigkeit optimal ist. Die Steuereinrichtung in Form des Computers 18 führt deshalb im Rahmen des anhand der Fig. 3 geschilderten Verfahrensablaufes eine Regelung durch, die anhand Fig. 6 erläutert sei:

Fig. 6 zeigt den Verfahrensablauf, wobei die in Fig. 3 bereits dargestellten und anhand dieser Figur erläuterten Schritte mit denselben Bezugszeichen versehen sind, so daß auf eine Beschreibungswiederholung verzichtet werden kann. Zusätzlich zu einem Startschritt S0 und einem Endschritt S9 sowie einer im Verfahrensablauf auch bei Fig. 3 implizit vorgesehenen Abfrage S7, ob die Bildaufnahme abgeschlossen ist, zeigt Fig. 6 noch einen Schritt S8, der eine Einzelbildauswertung und Stellgrößenmodifikation darstellt. In diesem Schritt S8 wird ein zuvor erzeugtes Einzelbild ausgewertet, und aus der Auswertung folgt eine Modifikation von Betriebsparametern bei der Einbringung des Umschaltsignals (Schritt S1), bei der Fluoreszenzanregung (Schritt S2) und/oder bei der Fluoreszenzdetektion (Schritt S3). Der Schritt S8 muß dabei nicht nach jeder Erzeugung eines Einzelbildes ausgeführt werden. Je nach angestrebter Regelungsgeschwindigkeit und vertretbarem Regelungsaufwand kann der Schritt S8 auch nur nach jedem zweiten, dritten, etc. Durchlauf ausgeführt werden, wobei dann ein einzelnen Einzelbild oder die gesamte Gruppe der seit der letzten Ausführung des Schrittes S8 erzeugter Einzelbilder in der Auswertung verwendet werden kann.

Die Einzelbildauswertung erzeugt eine Gütefunktion, die z.B. ein Maß für die Separation der fluoreszierenden Markierungsmoleküle ist. Die zuvor allgemein beschriebenen Ansätze können hier einzeln oder in beliebigen Kombinationen zur Anwendung kommen.

Zusätzlich sei noch erwähnt, daß die Einzelbildauswertung sich auch auf explizit der Probe zugesetzten Marker richten kann, die nicht zur Markierung von zu analysierenden Probenelementen dienen, sondern lediglich zur Optimierung der Einzelbildaufnahme ausgewertet werden.

In Fig. 7 ist eine Weiterbildung des Mikroskop 6 der Fig. 5 dargestellt, das zusätzlich zum geschilderten PALM-Verfahren simultan auch klassische Mikroskopieverfahren, d. h. Mikroskopieverfahren deren Auflösung beugungsbegrenzt ist, ausführen kann. Elemente des in Fig. 7 gezeigten Mikroskops 21, die denen des Mikroskops 6 entsprechen, sind mit denselben Bezugszeichen versehen. Die obige Beschreibung gilt für sie gleichermaßen, soweit nichts anderes vermerkt ist.

Das Mikroskop 21 ist modular aufgebaut, und zur besseren Erläuterung der Erfindung wird es in einer umfangreichen Ausbaustufe beschrieben. Es ist aber auch eine reduzierte Bauweise mit weniger Modulen möglich. Auch ist der modulare Aufbau auch nicht zwingend; eine einteilige oder nicht-modulare Bauform ist ebenfalls möglich. Das Mikroskop 21 ist auf Basis eines herkömmlichen Laser-Scanning-Mikroskops aufgebaut und erfaßt die Probe 7.

Durch das Objektiv 15 läuft die Strahlung für alle Mikroskopieverfahren. Das Objektiv 15 bildet über den Strahlteiler 14 die Probe 7 zusammen mit der Tubuslinse 17 auf den Detektor 5 ab, der allgemein ein Flächendetektor ist. Insofern verfügt das Mikroskop 21 über ein herkömmliches Lichtmikroskopmodul, und der Strahlengang von der Probe 7 durch das Objektiv 15 und die Tubuslinse 17 zum Detektor 5 entspricht einem herkömmlichen Weitfeld-Detektionsstrahlengang. Der Strahlteiler 14 ist vorzugsweise austauschbar, um zwischen Strahlteilern mit verschiedenen dichroitischen Eigenschaften bzw. achromatischen Strahlteilern gemäß US 2008/0088920 wechseln zu können.

In den Strahlengang zum Objektiv 21 ist weiter ein Laser-Scanning-Modul 22 angebunden, dessen LSM-Beleuchtungs- und Detektionsstrahlengang über einen weiteren, ebenfalls vorzugsweise austauschbaren Strahlteiler 23 in den Strahlengang zum Objektiv 15 eingekoppelt ist. Das Laser-Scanning-Modul 22 hat mehrere Komponenten. Eine Lasereinrichtung 24 umfaßt einen Laser 25, der einen angesteuerten Phasenmodulator 26 beaufschlagt. Eine Optik 27 bündelt die Strahlung dann auf ein DMD 28. Für den Detektionszweig des LSM-Moduls ist in Fig. 4 exemplarisch ein LSM-Detektor 29 sowie eine in einer Zwischenbildebene befindliche, konfokale Blende 30 eingezeichnet. Der Detektionszweig ist durch den Strahlteiler 23 angekoppelt. Die Strahlteiler 14 und 23 sind optional zu einem Strahlteilermodul 12 zusammengefaßt, wodurch dann die Möglichkeit besteht, sie anwendungsabhängig zu wechseln.

Die Lasereinrichtung 24 des Laser-Scanning-Moduls 22 erzeugt für den PALM-Betrieb erforderliche Strahlung analog der Strahlungsquelle 8, kann also Strahlung bei verschiedenen Wellenlängen abgeben oder umfaßt mehrere Laserquellen.

Als weiteres Beleuchtungsmodul ist ein optionales TIRF-Beleuchtungsmodul 31 vorgesehen, das eine einschaltbare TIRF-Beleuchtung realisiert. Das TIRF-Beleuchtungsmodul 31 erzeutg Strahlung oder erhält sie von einer Strahlungsquelle, z.B. einem Laser über eine Lichtleitfaser. Das TIRF-Beleuchtungsmodul 31 ist ausgebildet, am Objektiv 15 TIRF-Beleuchtung unter einem einstellbaren Winkel zur optischen Achse des Objektivs 13 einzustrahlen. Auf diese Weise kann einfach der Winkel der Totalreflexion am Deckglas sichergestellt werden. Auch kann das TIRF-Beleuchtungsmodul 31 als Weitfeldbeleuchtungsquelle arbeiten, wenn es einen Beleuchtungsstrahl auf der optischen Achse einstrahlt.

Die Module und Antriebe sowie Detektoren des Mikroskops 1 sind alle über nicht näher bezeichnete (gestrichelt gezeichnete) Leitungen mit einer Steuereinrichtung 32 verbunden. Diese Verbindung kann beispielsweise über ein Daten- und Steuemetzwerk 33 erfolgen. Die Steuereinrichtung 32 steuert das Mikroskop 21 in verschiedene Betriebsmodi.

Das Steuergerät 32 ist ausgebildet, um am Mikroskop 21 klassische Mikroskopie, d. h. Weitfeldmikroskopie (WF), Laserscanningmikroskopie (LSM) und auch Fluoreszenzmikroskopie mit totaler interner Reflexion (TIRF) auszuführen und diese dem hochauflösenden Mikroskopieverfahren PAL-M zu kombinieren.

Weiter ist in Fig. 4 exemplarisch ein Computer mit Anzeige 19 dargestellt, der ebenfalls an das Daten- und Steuemetzwerk 33 angeschlossen ist, über das die Steuereinrichtung 32 mit den einzelnen Komponenten des Kombinations-Mikroskops 21 verbunden ist.

Auch ist in Fig. 4 ein Probentisch 42 dargestellt, auf dem die Probe 7 unter Steuerung der Steuereinrichtung 32 verschieblich ist. Ein solcher Probentisch ist natürlich, wie alle anderen Details der Fig. 4 auch, auch im Mikroskop 6 der Fig. 5 möglich.

Weiter erlaubt das Mikroskop 21 eine verbesserte Aktivierung und/oder Anregung:

Zum einen können Regionen besonderen Interesses (ROI) von einem Nutzer selbst, vom Computer unterstützt oder automatisch ausgewählt werden, und die Steuerung der Aktivierungsstrahlung aus dem Lasereinrichtung 24 wird entsprechend beeinflußt. Hierzu wird das DMD 28 eingesetzt, das vollflächig mit Laserstrahlung des Lasers 24 ausgeleuchtet ist. Die einzelnen Spiegel des DMD werden nun so gestellt, daß nur die ausgewählten ROI beleuchtet und damit nur in diesen Regionen eine optische Aktivierung des Markierungsstoffes (z. B. DRONPA oder EOS-FP) durchgeführt wird. Die restlichen Spiegel des DMD 28 verbleiben in einer ausgeschalteten Position, und die darauf geleitete Strahlung wird in einer (nicht dargestellten) Strahlfalle absorbiert.

Zum anderen können die eingeschalteten DMD-Spiegel zeitmoduliert werden, um die Aktivierungsleistung kontinuierlich abzuschwächen. Hierdurch kann, für das PAL-Verfahren besonders vorteilhaft, die Aktivierungsleistung effizient an die Molekülkonzentration angepaßt werden, so daß sich unabhängig von der lokalen Markierungsmolekülkonzentration die aktivierten Moleküle in einem Abstand größer als die optische Auflösung des Mikroskops 21 befinden. Damit kann die Probe 7 besonders schnell vermessen werden, insbesondere da im Rahmen der beschriebene Regelung die Aktivierungsintensität und/oder räumliche Verteilung passend eingestellt werden kann. Eine lokale Einstellung ist besonders vorteilhaft, wenn starke lokale Konzentrationsänderungen auftreten, z. B. helle Bereiche neben schwach gefärbten Bereichen vorhanden sind. Weiter kann lokal unterschiedliches Ausbleichen von Markierungsstoffen, welche z. B. aufgrund von Strukturvariationen in der Probe 7 auftreten kann, zu lokalen Konzentrationsänderungen führen, die nun mit der Aktivierungsregelung besonders vorteilhaft ausgeglichen werden können.

Alternativ oder zusätzlich kann bei einer Aktivierung in vordefinierten ROI mittels des optionalen Phasenmodulators 26 das ROI-Muster vorgeformt auf die gesamte DMD 28 abgebildet werden, welche dann nur noch eine Feinabstimmung vornimmt. So wird die Leistung des Lasers 25 nahezu vollständig zur Aktivierung von Markierungsmolekülen in der Probe 7 eingesetzt. Der Phasenmodulator 26 ist dazu in einer Pupillenebene vor der DMD 28 (vom Laser 25 aus betrachtet) angeordnet und befindet sich im Abstand der Brennweite der Optik 27 (die auch durch eine einzelne Linse realisiert werden kann). Das DMD 28 ist wiederum im selben Abstand nach der Optik 27 lokalisiert. Alternativ kann man auch auf die DMD 28 verzichten, wenn beispielsweise die ROI-Auswahl durch den Phasenmodulator 26 erfolgt und die Intensität der Laserquelle 25 global geregelt wird, z. B. durch einen dem Laser nachgeschalteten Intensitätsmodulator oder eine direkte Intensitätsmodulation des Lasers 25. Die Intensitätsmodulation ist in der beschriebenen Regelung natürlich ganz grundsätzlich möglich, auch bei andersartig gestalteten Mikroskopen.

Mit Hilfe des Kombinations-Mikroskops 1 der Fig. 1 oder 4 ist es zusätzliche möglich, sequentiell oder simultan LSM-Mikroskopie-Bilder und PAL-M-Mikroskopie-Bilder aufzuzeichnen und die Aufnahme der PAL-M-Mikroskopie-Bilder nicht nur mittels Informationen, die aus einem oder mehreren PALM-Einzelbildern gewonnen wurden, sondern auch mit Daten, die aus dem LSM-Mikroskopie-Bild erzeugt wurden, zu regeln.

Die zur Regelung der Einzelbildaufnahme verwendeten Stellgrößen können sein:
1. Detektionsseitig:
   a. Frequenzbänder/Filter;
   b. Verstärkungsfaktoren (z.B. Preamp Gain, EMCCD Gain);
   c. Temperatur eines Detektors;
   d. Integrationszeit der Detektion;
   e. Detektionsmodi (z.B. Photonenzählung, BaselineClamp) der Detektion;
   f. Auslesen nur spezieller ROIs;
   g. Polarisation der detektierten Strahlung;
   h. Fokus.
2. Anregungsseitig:
   a. Eingestrahlte Anregungs- und/oder Aktivierungsstrahlung;
      i. Pulsform oder CW;
      ii. Leistung und Pulsfrequenz;
      iii. Wellenlängen;
   b. Bestrahlungsdauer;
   c. Anregung lokal spezifisch (pixelgenau) oder spezieller ROIs oder flächig;
   d. Größe des Beleuchtungsfeldes;
   e. Eindringtiefe bei TIRF-Beleuchtung;
   f. Fokuslage.
3. Probenseitig:
   Position der Beobachtungsregion in der Probe.

Die Einzelbildauswertung kann insbesondere Aussagen über folgende Parameter liefern:
1. Farbstoffeigenschaften:
   a. Bleichrate;
   b. Anregungs-/Emissionsspektren;
   c. Lebensdauer;
   d. Aktivierungsschwelle;
   e. Photonenrate pro Molekül;
   f. Blinkrate;
2. Abbildungs-/Bildeigenschaften:
   a. Form und Intensität der gemessenen Punktverwaschungsfunktionen, nicht nur der einzelnen aktivierten Moleküle sondern auch von eventuell der Probe beigesetzten Markern (z.B.: gold beads), Differenz in Form und Intensität der gemessenen PSFs bei unterschiedlichen Farben;
   b. Zeit, über die einzelne Moleküle im Mittel sichtbar sind;
   c. Anzahl der pro Punktverwaschungsfunktion aktivierten Moleküle, die sich räumlich und zeitlich überlappen (Maß für "Aktivierungsdichte");
   d. Markierungsmoleküldichte (lokal definiert), gemessen durch z.B. Intensitäten der Fluoreszenz bei einer weiteren Wellenlänge. Dies ist für Farbstoffe möglich, die zwischen zwei fluoreszierenden Zuständen schalten/konvertieren (z.B. tdEoS). Markierungsmoleküldichte kann darüber hinaus auch über Fluoreszenz bei der Meßwellenlänge bestimmt werden durch z.B. ein frühes Bild auf dem diverse bereits konvertierte, aber nicht geblichene Markierungsmoleküle zu sehen sind. Darüber hinaus kann auch über weitere korrelierte Färbungen oder andere Kontrastverfahren die Labeldichte geschätzt werden;
   e. Anzahl der gesammelten Photonen pro Molekül;
   f. Anzahl der aktivierten Moleküle pro Einzelbild;
   g. Mittlere Lokalisationsgenauigkeit der Moleküle pro Einzelbild;
   h. Zum Kameraschutz kann zum einen die Kombination aus verwendeten Filtern und Anregungsleitungen einzelner Laserwellenlängen verwendet werden, zum anderen aber auch die gemessenen Intensitäten detektierter Fluoreszenz bei anderen Wellenlängen;
   i. Korrelation von Fluoreszenzbildern aufgenommen mit u.U. unterschiedlichen Anregungswellenlängen oder Korrelation mit Bildern aus weiteren Kontrastverfahren wie z.B. DIC.

## Patentansprüche

1. Verfahren zur räumlich hochauflösenden Lumineszenzmikroskopie einer Probe, die mit Markierungsmolekülen markiert ist, welche mit einem Umschaltsignal derart aktivierbar sind, dass sie erst im aktivierten Zustand zur Abgabe bestimmter Lumineszenzstrahlung anregbar sind, wobei das Verfahren folgende Schritte aufweist:
a) Einbringen des Umschaltsignals auf die Probe derart, dass nur eine Teilmenge der in der Probe vorhandenen Markierungsmoleküle aktiviert werden, wobei in der Probe Teilbereiche bestehen, in denen aktivierte Markierungsmoleküle zu den ihnen nächst benachbarten aktivierten Markierungsmoleküle mindestens einen Abstand haben, der größer oder gleich einer Länge ist, welche sich aus einer vorbestimmten optischen Auflösung ergibt,
b) Anregung der aktivierten Moleküle zur Abgabe von Lumineszenzstrahlung,
c) Detektion der Lumineszenzstrahlung mit der vorbestimmten optischen Auflösung, und
d) Erzeugen eines Einzelbildes aus der in Schritt c) aufgenommenen Lumineszenzstrahlung, wobei die geometrischen Orte der Lumineszenzstrahlung abgebenden Markierungsmoleküle mit einer über die vorbestimmte optische Auflösung gesteigerten Ortsauflösung ermittelt werden,
wobei die Schritte a) - d) mehrfach wiederholt werden und die so erhaltenen, mehreren Einzelbilder zu einem Gesamtbild zusammengefügt werden,
**dadurch gekennzeichnet, dass**
die Aufnahme des Gesamtbildes hinsichtlich einer kurzen Aufnahmedauer optimiert wird, indem eine Regelung der Aufnahme der mehreren Einzelbilder erfolgt, wobei in der Regelung wiederholt nach Schritt d) zumindest ein Einzelbild oder eine Gruppe der Einzelbilder ausgewertet wird und mindestens eine Stellgröße der Schritte a) - d) für folgende Wiederholungen der Schritte a) - d) modifiziert wird, und wobei bei der Regelung eine Gütefunktion ausgewertet und deren Wert maximiert wird, wobei die Gütefunktion so gewählt wird, dass sie direkt oder indirekt ein Maß für den Anteil der Markierungsmoleküle in der Probe ist, welche aktiviert sind und zu den ihnen nächst benachbarten aktivierten Markierungsmoleküle mindestens den Abstand haben, der mit der vorbestimmten optischen Auflösung auflösbar ist.

2. Verfahren nach Anspruch 1, **dadurch gekennzeichnet, dass** die Gütefunktion ein Dichtemaß für die aktivierten Moleküle ist.

3. Verfahren nach Anspruch 2, **dadurch gekennzeichnet, dass** zur Auswertung der Gütefunktion in jedem der ausgewerteten Einzelbilder lumineszierende Gebiete ermittelt werden, die von benachbarten lumineszierenden Gebieten isoliert sind, in den isolierten lumineszierenden Gebieten ein Maß für die Menge der vom jeweiligen isolierten lumineszierenden Gebiet abgegebenen Lumineszenzstrahlung ermittelt wird, und der Anteil der Gebiete, für die ein unter einem Schwellwert liegendes Maß auftritt, als Wert der Gütefunktion genommen wird.

4. Verfahren nach Anspruch 3, **dadurch gekennzeichnet, dass** das Maß für die Menge der abgegebenen Lumineszenzstrahlung ein Integral über die Lumineszenzstrahlungsintensität oder das Maximum der Lumineszenzstrahlungsintensität ist.

5. Verfahren nach Anspruch 2, **dadurch gekennzeichnet, dass** zur Auswertung der Gütefunktion in jedem der ausgewerteten Einzelbilder lumineszierende Gebiete ermittelt werden, die von benachbarten lumineszierenden Gebieten isoliert sind, für jedes dieser isolierten lumineszierenden Gebiete der minimale Abstand zum nächst benachbarten lumineszierenden Gebiet bestimmt wird und der Anteil der Gebiete, deren minimaler Abstand größer als ein durch die vorbestimmte optische Auflösung vorgegebener, auflösbarer Mindestabstand oder ein vorgegebenes Vielfaches dieses Abstandes ist, als Wert der Gütefunktion genommen wird.

6. Verfahren nach Anspruch 5, **dadurch gekennzeichnet, dass** zur Bestimmung des minimalen Abstandes ein Kreis um das geometrischen Zentrum des jeweiligen lumineszierenden Gebietes gelegt wird, der bis zum nächst benachbarten lumineszierenden Gebietes reicht, und dass der Anteil der Gebiete, deren Kreisradius größer als der Abstand oder ein vorgegebenes Vielfaches des Abstandes ist, als Wert der Gütefunktion genommen wird.

7. Verfahren nach Anspruch 1, **dadurch gekennzeichnet, dass** eine Gruppe aufeinanderfolgender Einzelbilder ausgewertet wird, in jedem der ausgewerteten Einzelbilder lumineszierende Gebiete ermittelt werden, die von benachbarten lumineszierenden Gebieten isoliert sind, und der Anteil der lumineszierenden Gebiete, die in genau einem Einzelbild der Gruppe lumineszieren, als Wert der Gütefunktion genommen wird.

8. Verfahren nach eine der obigen Ansprüche, **dadurch gekennzeichnet, dass** die Stellgrößen mindestens einen der folgenden Parameter umfassen:
- Filterung, Polarisationsfilterung, Verstärkung, Detektortemperatur, Integrationsdauer, Detektionsfeldwahl, Fokuslage und -größe bei der Detektion der Lumineszenzstrahlung; und
- Leistung, Pulsform, Pulsfrequenz, Wellenlängen, Bestrahlungsdauer, Bestrahlungsfeldwahl, Eindringtiefe eine TIRF-Beleuchtung, Fokuslage und -größe beim Einbringen des Umschaltsignals oder bei der Anregung der aktivierten Moleküle.

9. Verfahren nach einem der obigen Ansprüche, **dadurch gekennzeichnet, dass** in der Bildauswertung mindestens eine der folgenden Größen erfasst und ausgewertet wird: Bleichrate der Markierungsmoleküle, Anregungs- und Emissionsspektren der Markierungsmoleküle, Lebensdauer von Lumineszenzzuständen der Markierungsmoleküle, Aktivierungsschwelle der Markierungsmoleküle, Blinkrate der Markierungsmoleküle, Zeit, über die einzelne Markierungsmoleküle im Mittel sichtbar sind, Anzahl an innerhalb der optischen Auflösung zusammenfallenden, lumineszierenden Markierungsmolekülen, Anzahl der gesammelten Photonen pro lumineszierendem Markierungsmolekül, Anzahl der aktivierten Markierungsmolekülen pro Einzelbild, mittlere Lokalisierungsgenauigkeit der Markierungsmoleküle pro Einzelbild.

10. Verfahren nach einem der obigen Ansprüche, **dadurch gekennzeichnet, dass** weitere, optische Auflösung aufweisende Fluoreszenzbilder mit mehreren Anregungswellenlängen oder Kontrastverfahren aufgenommen werden und die Einzelbilder für die Auswertung mit diesen Fluoreszenzbildern korreliert werden.

11. Verfahren nach Anspruch 10, **dadurch gekennzeichnet, dass** die weiteren Fluoreszenzbilder während der Aufnahme der Einzelbilder aufgenommen werden.

## Claims

1. Method for spatially high-resolution luminescence microscopy of a sample, which is labelled with label molecules, which can be activated by a switching signal such that said label molecules can only be excited to emit particular luminescence radiation in activated state, wherein the method comprises the following steps:
a) introducing the switching signal onto the sample such that only one subset of the label molecules present in the sample is activated, wherein there are sub-areas in the sample in which activated label molecules have a distance to their closest neighbouring activated label molecules that is at least greater than or equal to a length which results from a predetermined optical resolution,
b) exciting the activated molecules to emit luminescence radiation,
c) detecting the luminescence radiation with the predetermined optical resolution and
d) generating a single frame from the luminescence radiation recorded in step c), wherein the geometric locations of the luminescence-radiation-emitting label molecules are identified with a spatial resolution increased above the predetermined optical resolution,
wherein steps a) - d) are repeated several times and the plurality of individual frames obtained in this way are combined to form a total image,
**characterised in that**
the recording of the total image is optimised with respect to a short recording duration **in that** recording of the plurality of individual frames is controlled, wherein in the control repeated after step d) at least one single frame or a group of the individual frames is evaluated and at least one variable of steps a) - d) is modified for subsequent repetitions of steps a) - d) and wherein during the control a quality function is evaluated and the value thereof is maximised, wherein the quality function is chosen such that it is directly or indirectly a measure of the proportion of the label molecules in the sample which are activated and have at least the distance to their closest neighbouring activated label molecules which can be resolved with the predetermined optical resolution.

2. Method according to claim 1, **characterised in that** the quality function is a density measurement for the activated molecules.

3. Method according to claim 2, **characterised in that**, for the evaluation of the quality function, luminescent domains which are isolated from neighbouring luminescent domains are identified in each of the evaluated individual frames, a measure of the quantity of the luminescence radiation emitted by the respective isolated luminescent domain is determined in the isolated luminescent domains and the proportion of the domains for which a measure lying below a threshold occurs is taken as a value for the quality function.

4. Method according to claim 3, **characterised in that** the measure for the quantity of emitted luminescence radiation is an integral over the luminescence radiation intensity or the maximum of the luminescence radiation intensity.

5. Method according to claim 2, **characterised in that**, for the evaluation of the quality function, luminescent domains which are isolated from neighbouring luminescent domains are determined in each of the evaluated individual frames, the minimum distance to the closest neighbouring luminescent domain is determined for each of these isolated luminescent domains and the proportion of the domains of which the minimum distance is greater than a resolvable minimum distance specified by the predetermined optical resolution or a predetermined multiple of this distance is taken as the value of the quality function.

6. Method according to claim 5, **characterised in that**, for the determination of the minimum distance, a circle is placed around the geometric centre of the respective luminescent domain, said circle extending as far as the closest neighbouring luminescent domain and that the proportion of the domains of which the circle radius is greater than the distance or a predetermined multiple of the distance is taken as the value of the quality function.

7. Method according to claim 1, **characterised in that** a group of successive individual frames is evaluated, luminescent domains which are isolated from neighbouring luminescent domains are identified in each of the evaluated individual frames and the proportion of the luminescent domains, which luminesce in precisely one single frame of the group is taken as value of the quality function.

8. Method according to any one of the preceding claims, **characterised in that** the variables comprise at least one of the following parameters: filtering, polarisation filtering, amplification, detector temperature, integration duration, choice of detection field, position and size of focus during the detection of the luminescence radiation; and power, pulse shape, pulse frequency, wavelengths, radiation duration, choice of radiation field. penetration depth of a TIRF illumination, position and size of focus during the introduction of the switching signal or during the excitation of the activated molecules.

9. Method according to any one of the preceding claims, **characterised in that** at least one of the following variables is detected and evaluated in the image evaluation: bleaching rate of the label molecules, excitation and emission spectra of the label molecules, life of luminescence states of the label molecules, activation threshold of the label molecules, blinking rate of the label molecules, time for which the individual label molecules are visible on average, number of luminescent label molecules coinciding within the optical resolution, number of collected photons per luminescent label molecule, number of activated label molecules per single frame, average localisation accuracy of the label molecules per single frame.

10. Method according to any one of the preceding claims, **characterised in that** further fluorescence images having optical resolution are recorded with a plurality of excitation wavelengths or contrast methods and the individual frames are correlated with these fluorescence images for the evaluation.

11. Method according to claim 10, **characterised in that** the further fluorescence images are recorded during the recording of the individual frames.

## Revendications

1. Procédé pour la microscopie à luminescence à haute résolution locale d'un échantillon qui est marqué au moyen de molécules de marquage qui peuvent être activées avec un signal de commutation de telle sorte qu'elles peuvent seulement être excitées dans l'état activé aux fins de l'émission d'un rayonnement luminescent déterminé, étant entendu que le procédé comprend les étapes suivantes :
a) application du signal de commutation à l'échantillon de telle sorte que seule une quantité partielle des molécules de marquage présentes dans l'échantillon sont activées, étant entendu qu'il existe dans l'échantillon des zones partielles dans lesquelles des molécules de marquage activées présentent, par rapport aux molécules de marquage activées adjacentes qui en sont les plus proches, au moins une distance qui est supérieure ou égale à une longueur qui résulte d'une résolution optique prédéterminée ;
b) excitation des molécules activées aux fins de l'émission d'un rayonnement luminescent ;
c) détection du rayonnement luminescent avec la résolution optique prédéterminée ; et
d) production d'une image individuelle à partir du rayonnement luminescent enregistré à l'étape c), étant entendu que les lieux géométriques des molécules de marquage émettant le rayonnement luminescent sont déterminés avec une résolution locale augmentée au-dessus de la résolution optique prédéterminée ;
étant entendu que les étapes a) à d) sont répétées plusieurs fois et que les multiples images individuelles ainsi obtenues sont assemblées pour former une image globale,
**caractérisé en ce que**
l'enregistrement de l'image globale est optimisé en fonction d'une durée d'enregistrement courte **en ce qu'**un réglage de l'enregistrement des multiples images individuelles est effectué, étant entendu que dans le cadre du réglage, au moins une image individuelle ou un groupe d'images individuelles sont analysées de façon répétée après l'étape d) et au moins une grandeur de réglage des étapes a) à d) est modifiée pour les répétitions suivantes des étapes a) à d), et étant entendu que dans le cadre du réglage, une fonction de qualité est analysée et sa valeur est maximisée, étant entendu que la fonction de qualité est choisie de telle sorte qu'elle représente directement ou indirectement une mesure de la proportion des molécules de marquage présentes dans l'échantillon qui sont activées et qui présentent, par rapport aux molécules de marquage activées adjacentes qui en sont les plus proches, au moins la distance qui peut être résolue avec la résolution optique prédéterminée.

2. Procédé selon la revendication 1, **caractérisé en ce que** la fonction de qualité est une mesure de densité pour les molécules activées.

3. Procédé selon la revendication 2, **caractérisé en ce qu'**aux fins de l'analyse de la fonction de qualité, dans chacune des images individuelles analysées, on détermine des secteurs luminescents, qui sont isolés de secteurs luminescents adjacents, une mesure est déterminée dans les secteurs luminescents isolés pour la quantité du rayonnement luminescent émise par le secteur luminescent isolé respectif, et la proportion des secteurs pour lesquels une mesure située en dessous d'une valeur de seuil apparaît est utilisée comme valeur pour la fonction de qualité.

4. Procédé selon la revendication 3, **caractérisé en ce que** la mesure pour la quantité du rayonnement luminescent émis est une intégrale sur l'intensité du rayonnement luminescent ou le maximum de l'intensité du rayonnement luminescent.

5. Procédé selon la revendication 2, **caractérisé en ce qu'**aux fins de l'analyse de la fonction de qualité, dans chacune des images individuelles analysées, on détermine des secteurs luminescents, qui sont isolés de secteurs luminescents adjacents, la distance minimale par rapport au secteur luminescent adjacent le plus proche est déterminée pour chacun de ces secteurs luminescents isolés, et la proportion des secteurs dont la distance minimale est supérieure à une distance minimale prédéterminée pouvant être résolue par la résolution optique prédéterminée ou à un multiple prédéterminé de cette distance est utilisée comme valeur pour la fonction de qualité.

6. Procédé selon la revendication 5, **caractérisé en ce qu'**aux fins de la détermination de la distance minimale, on trace autour du centre géométrique du secteur luminescent respectif un cercle qui s'étend jusqu'au secteur luminescent adjacent le plus proche, et **en ce que** la proportion des secteurs dont le rayon du cercle est plus grand que la distance ou qu'un multiple prédéterminé de la distance est utilisée comme valeur pour la fonction de qualité.

7. Procédé selon la revendication 1, **caractérisé en ce qu'**un groupe d'images individuelles successives est analysé, dans chacune des images individuelles analysées, on détermine des secteurs luminescents, qui sont isolés des secteurs luminescents adjacents, et la proportion des secteurs luminescents qui sont luminescents dans précisément une image individuelle du groupe est utilisée comme valeur pour la fonction de qualité.

8. Procédé selon l'une des revendications précédentes, **caractérisé en ce que** les grandeurs de réglage comprennent au moins l'un des paramètres suivants :
- filtrage, filtrage de polarisation, renforcement, température du détecteur, durée d'intégration, choix du champ de détection, position et grandeur de la focalisation lors de la détection du rayonnement luminescent ; et
- puissance, forme d'impulsion, fréquence d'impulsion, longueurs d'ondes, durée de rayonnement, choix du champ de rayonnement, profondeur de pénétration d'un éclairage TIRF, position et grandeur de la focalisation lors de l'application du signal de commutation ou lors de l'excitation des molécules activées.

9. Procédé selon l'une des revendications précédentes, **caractérisé en ce qu'**au moins l'une des grandeurs suivantes est détectée est analysée dans le cadre de l'analyse d'image : taux de blanchissement des molécules de marquage, spectres d'excitation et d'émission des molécules de marquage, durée de vie d'états de luminescence des molécules de marquage, seuil d'activation des molécules de marquage, taux de clignotement des molécules de marquage, temps pendant lequel les molécules de marquage individuelles sont visibles dans la substance, nombre de molécules de marquage luminescentes coïncidant à l'intérieur de la résolution optique, nombre de photos rassemblés par molécule de marquage luminescente, nombre de molécules de marquage activées par image individuelle, précision de localisation moyenne des molécules de marquage par image individuelle.

10. Procédé selon l'une des revendications précédentes, **caractérisé en ce que** des images fluorescentes supplémentaires présentant une résolution optique, avec plusieurs longueurs d'ondes d'excitation ou procédés de contraste, sont enregistrées et les images individuelles sont corrélées avec ces images fluorescentes pour l'analyse.

11. Procédé selon la revendication 10, **caractérisé en ce que** les images fluorescentes supplémentaires sont enregistrées pendant l'enregistrement des images individuelles.
